(19) **Europäisches Patentamt**
**European Patent Office**
**Office européen des brevets**

(11) **EP 3 379 444 A1**

(12) **EUROPEAN PATENT APPLICATION**
published in accordance with Art. 153(4) EPC

(43) Date of publication:
**26.09.2018 Bulletin 2018/39**

(51) Int Cl.:
***G06F 21/62*** *(2013.01)*

(21) Application number: **15911046.9**

(22) Date of filing: **22.12.2015**

(86) International application number:
**PCT/CN2015/098220**

(87) International publication number:
**WO 2017/107047 (29.06.2017 Gazette 2017/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Huawei Technologies Co., Ltd.**
**Longgang District**
**Shenzhen, Guangdong 518129 (CN)**

(72) Inventors:
• **WANG, Yufeng**
**Nanjing**
**Jiangsu 210003 (CN)**
• **XU, Jing**
**Nanjing**
**Jiangsu 210003 (CN)**

(74) Representative: **Thun, Clemens**
**Mitscherlich PartmbB**
**Patent- und Rechtsanwälte**
**Sonnenstraße 33**
**80331 München (DE)**

(54) **USER ATTRIBUTE MATCHING METHOD AND TERMINAL**

(57) A user attribute matching method and a terminal are provided. The method includes: generating, by a first terminal, a key by using an ElGamal algorithm (S101); encrypting, by the first terminal, a first user attribute value vector of the first terminal by using the public key, to form a first ciphertext (S102); sending, by the first terminal, the first ciphertext and the public key to a second terminal, so that the second terminal performs an operation on a second user attribute value vector of the second terminal and the received first ciphertext, to obtain a second ciphertext, encrypts a modulus of the second user attribute value vector by using the public key, to obtain a third ciphertext, and sends the second ciphertext and the third ciphertext to the first terminal (S103); receiving, by the first terminal, the second ciphertext and the third ciphertext that are sent by the second terminal (S104); decrypting, by the first terminal, the received second ciphertext and third ciphertext based on the private key (S105); and obtaining, by the first terminal, a matching similarity between user attributes of the first terminal and the second terminal based on the decrypted second ciphertext and third ciphertext (S106). In the method, a plaintext of a user attribute value does not need to be learned of, and a user attribute information matching result is obtained through a lightweight operation while user privacy is protected, so that matching efficiency is improved, and operation load of a terminal is relieved.

FIG. 1

## Description

## TECHNICAL FIELD

The present invention relates to the field of mobile technologies, and in particular, to a user attribute matching method and a terminal.

## BACKGROUND

Nowadays, with rapid development of mobile terminals and social networks, people pay more attention to a mobile social network. Based on mobility of a terminal and a location-based service, a mobile social network in proximity (English: Mobile Social Networks in Proximity, MSNP for short) becomes a hot research topic. In the MSNP, a user may expose some personal attribute information (such as an interest, an age, and a gender) to a surrounding stranger to measure a similarity between users, and perform a matching operation to search for a potential friend. However, in this case, there is a risk of exposing personal privacy of the user.

## SUMMARY

Embodiments of the present invention provide a user attribute matching method and a terminal, to obtain a user attribute information matching result through a lightweight operation while user privacy is protected.

According to a first aspect, a user attribute matching method is provided, including:

generating, by a first terminal, a key by using an ElGamal algorithm, where the key includes a public key and a private key;

encrypting, by the first terminal, a first user attribute value vector of the first terminal by using the public key, to form a first ciphertext;

sending, by the first terminal, the first ciphertext and the public key to a second terminal, so that the second terminal performs an operation on a second user attribute value vector of the second terminal and the received first ciphertext, to obtain a second ciphertext, encrypts a modulus of the second user attribute value vector by using the public key, to obtain a third ciphertext, and sends the second ciphertext and the third ciphertext to the first terminal;

receiving, by the first terminal, the second ciphertext and the third ciphertext that are sent by the second terminal;

decrypting, by the first terminal, the received second ciphertext and third ciphertext based on the private key; and

obtaining, by the first terminal, a matching similarity between user attributes of the first terminal and the second terminal based on the decrypted second ciphertext and third ciphertext.

A plaintext of user attribute information does not need to be learned of, and a user attribute information matching result is obtained through a lightweight operation while user privacy is protected.

With reference to the first aspect, in a first possible implementation, the method further includes: extending, by the first terminal, an original user attribute value vector of the first terminal to $\theta d$ dimensions in a specified manner, to generate the first user attribute value vector, where an original user attribute value of the first terminal is denoted as $u_i$ ($i \in [1, d]$), $u_i \in [0, \theta-1]$, and $\theta$ and $d$ are positive integers.

The original user attribute value vector is extended, so that richer user attribute information can be included.

With reference to the first aspect or the first possible implementation of the first aspect, in a second possible implementation, the obtaining, by the first terminal, a matching similarity between user attributes of the first terminal and the second terminal based on the decrypted second ciphertext and third ciphertext includes:

performing, by the first terminal based on the decrypted second ciphertext and third ciphertext, an operation on the decrypted second ciphertext and third ciphertext by using a cosine similarity operation, to obtain the matching similarity between the user attributes of the first terminal and the second terminal.

Matching calculation performed based on a cosine similarity helps improve matching execution efficiency.

According to a second aspect, a user attribute matching method is provided, including:

receiving, by a second terminal, a first ciphertext and a public key that are sent by a first terminal, where the first ciphertext is obtained by the first terminal after the first terminal encrypts a first user attribute value vector of the first terminal by using the public key;

performing, by the second terminal, an operation on a second user attribute value vector of the second terminal and the first ciphertext, to obtain a second ciphertext;

encrypting, by the second terminal, a modulus of the second user attribute value vector by using the public key, to obtain a third ciphertext; and

sending, by the second terminal, the second ciphertext and the third ciphertext to the first terminal, so that the first terminal decrypts the received second ciphertext and third ciphertext based on a private key corresponding to the public key, and obtains a matching similarity between user attributes of the first terminal and the second terminal based on the decrypted second ciphertext and third ciphertext.

With reference to the second aspect, in a first possible implementation, the method further includes:
extending, by the second terminal, an original user attribute value vector of the second terminal to $\theta \cdot d$ dimensions in a specified manner, to generate the second user attribute value vector, where an original user attribute value of the second terminal is denoted as $v_i(i \in [1, d])$, $v_i \in [0, \theta - 1]$, and $\theta$ and $d$ are positive integers.

According to a third aspect, a first terminal is provided, and the first terminal has a function of implementing first terminal behavior in the foregoing method. The function may be implemented by using hardware, or may be implemented by executing corresponding software by hardware. The hardware or the software includes one or more modules corresponding to the function.

In a possible implementation, the first terminal includes:

a key generation unit, configured to generate a key by using an ElGamal algorithm, where the key includes a public key and a private key;
an encryption unit, configured to encrypt a first user attribute value vector of the first terminal by using the public key, to form a first ciphertext;
a sending unit, configured to send the first ciphertext and the public key to a second terminal, so that the second terminal performs an operation on a second user attribute value vector of the second terminal and the received first ciphertext, to obtain a second ciphertext, encrypts a modulus of the second user attribute value vector by using the public key, to obtain a third ciphertext, and sends the second ciphertext and the third ciphertext to the first terminal;
a receiving unit, configured to receive the second ciphertext and the third ciphertext that are sent by the second terminal;
a decryption unit, configured to decrypt the received second ciphertext and third ciphertext based on the private key; and
a similarity calculation unit, configured to obtain a matching similarity between user attributes of the first terminal and the second terminal based on the decrypted second ciphertext and third ciphertext.

In another possible implementation, the first terminal includes:

a processor, a transmitter, and a receiver, where
the processor is configured to generate a key by using an ElGamal algorithm, where the key includes a public key and a private key;
the processor is further configured to encrypt a first user attribute value vector of the first terminal by using the public key, to form a first ciphertext;
the transmitter is configured to send the first ciphertext and the public key to a second terminal, so that the second terminal performs an operation on a second user attribute value vector of the second terminal and the received first ciphertext, to obtain a second ciphertext, encrypts a modulus of the second user attribute value vector by using the public key, to obtain a third ciphertext, and sends the second ciphertext and the third ciphertext to the first terminal;
the receiver is configured to receive the second ciphertext and the third ciphertext that are sent by the second terminal;
the processor is further configured to decrypt the received second ciphertext and third ciphertext based on the private key; and
the processor is further configured to obtain a matching similarity between user attributes of the first terminal and the second terminal based on the decrypted second ciphertext and third ciphertext.

According to a fourth aspect, a second terminal is provided, and the second terminal has a function of implementing second terminal behavior in the foregoing method. The function may be implemented by using hardware, or may be implemented by executing corresponding software by hardware. The hardware or the software includes one or more modules corresponding to the function.

In a possible implementation, the second terminal includes:

a receiving unit, configured to receive a first ciphertext and a public key that are sent by a first terminal, where the first ciphertext is obtained by the first terminal after the first terminal encrypts a first user attribute value vector of the first terminal by using the public key;
an operation unit, configured to perform an operation on a second user attribute value vector of the second terminal and the first ciphertext, to obtain a second ciphertext;

an encryption unit, configured to encrypt a modulus of the second user attribute value vector by using the public key, to obtain a third ciphertext; and

a sending unit, configured to send the second ciphertext and the third ciphertext to the first terminal, so that the first terminal decrypts the received second ciphertext and third ciphertext based on a private key corresponding to the public key, and obtains a matching similarity between user attributes of the first terminal and the second terminal based on the decrypted second ciphertext and third ciphertext.

In another possible implementation, the second terminal includes a receiver, a processor, and a transmitter, where

the receiver is configured to receive a first ciphertext and a public key that are sent by a first terminal, where the first ciphertext is obtained by the first terminal after the first terminal encrypts a first user attribute value vector of the first terminal by using the public key;

the processor is configured to perform an operation on a second user attribute value vector of the second terminal and the first ciphertext, to obtain a second ciphertext;

the processor is further configured to encrypt a modulus of the second user attribute value vector by using the public key, to obtain a third ciphertext; and

the transmitter is configured to send the second ciphertext and the third ciphertext to the first terminal, so that the first terminal decrypts the received second ciphertext and third ciphertext based on a private key corresponding to the public key, and obtains a matching similarity between user attributes of the first terminal and the second terminal based on the decrypted second ciphertext and third ciphertext.

Implementation of the user attribute matching method and the terminal that are provided in the embodiments of the present invention brings about the following beneficial effects:

A key is generated by using the ElGamal algorithm. A user attribute value vector of a sender is encrypted by using a public key in the key, to form a first ciphertext. The first ciphertext and the public key are sent to a receiver. The receiver performs an operation on a user attribute value vector of the receiver and the first ciphertext, to obtain a second ciphertext. In addition, the receiver encrypts a modulus of the user attribute value vector of the receiver by using the public key, to obtain a third ciphertext, and sends the second ciphertext and the third ciphertext to the sender. The sender decrypts the second ciphertext and the third ciphertext based on a private key in the key, and obtains a matching similarity between user attributes of the sender and the receiver based on the decrypted second ciphertext and third ciphertext. Therefore, a plaintext of user attribute information does not need to be learned of, and a user attribute information matching result is obtained through a lightweight operation while user privacy is protected, so that matching efficiency is improved, and operation load of a terminal is relieved.

## BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.

FIG. 1 is a schematic flowchart of a user attribute matching method according to an embodiment of the present invention;

FIG. 2 is a schematic flowchart of another user attribute matching method according to an embodiment of the present invention;

FIG. 3 is a schematic diagram of an example operation procedure of user attribute matching;

FIG. 4 is a schematic flowchart of still another user attribute matching method according to an embodiment of the present invention;

FIG. 5 is a schematic structural diagram of a first terminal according to an embodiment of the present invention;

FIG. 6 is a schematic structural diagram of a second terminal according to an embodiment of the present invention;

FIG. 7 is a schematic structural diagram of another first terminal according to an embodiment of the present invention; and

FIG. 8 is a schematic structural diagram of another second terminal according to an embodiment of the present invention.

## DESCRIPTION OF EMBODIMENTS

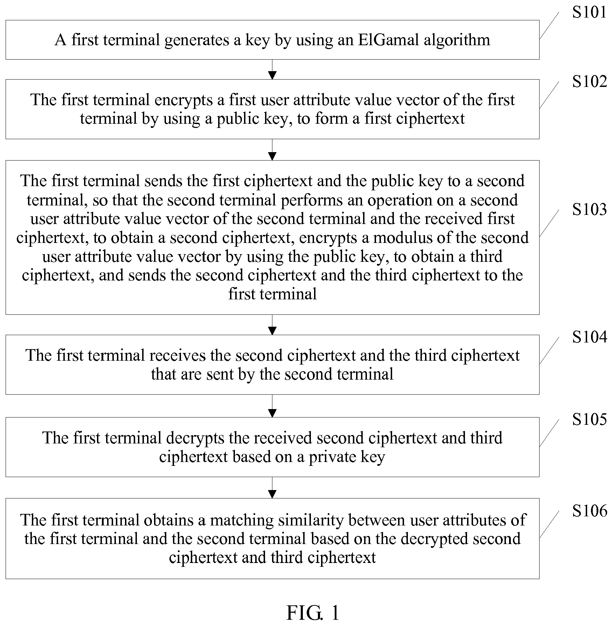

FIG. 1 is a schematic flowchart of a user attribute matching method according to an embodiment of the present invention. The method includes the following steps.

S101. A first terminal generates a key by using an ElGamal algorithm.

The ElGamal algorithm can be used for both data encryption and a digital signature. Security of the ElGamal algorithm depends on a difficult problem of calculating a discrete logarithm in a finite field. The key includes a public key and a private key. The public key and the private key are a pair of keys. For a generation process of the key pair, refer to the prior art, or refer to a description in the following embodiment.

S102. The first terminal encrypts a first user attribute value vector of the first terminal by using a public key, to form a first ciphertext.

The first user attribute value vector is a user attribute value vector extended in two dimensions: different types of user attributes and a value range of each original user attribute. The first user attribute value vector is encrypted by using the public key, to obtain the first ciphertext. An encrypted user attribute value of the first terminal is no longer a plaintext, and is not easy to decrypt. For example, the original user attribute is basketball or singing. A value of the original user attribute may fall into a specific value range. For example, the value range is from 1 to 9. The value range is corresponding to a preference degree of a user for the original user attribute. For example, the user of the first terminal sets a value of basketball to 7, and sets a value of singing to 5.

S103. The first terminal sends the first ciphertext and the public key to a second terminal, so that the second terminal performs an operation on a second user attribute value vector of the second terminal and the received first ciphertext, to obtain a second ciphertext, encrypts a modulus of the second user attribute value vector by using the public key, to obtain a third ciphertext, and sends the second ciphertext and the third ciphertext to the first terminal.

The second user attribute value vector herein is also a user attribute value vector extended in the two dimensions: the different types of user attributes and the value range of each original user attribute.

The second terminal performs an operation on the second user attribute value vector and the first ciphertext, to obtain the second ciphertext. The operation may be specifically a dot product operation.

S104. The first terminal receives the second ciphertext and the third ciphertext that are sent by the second terminal.

S105. The first terminal decrypts the received second ciphertext and third ciphertext based on a private key.

S106. The first terminal obtains a matching similarity between user attributes of the first terminal and the second terminal based on the decrypted second ciphertext and third ciphertext.

The matching similarity that is obtained by the first terminal and that is between the user attributes of the first terminal and the second terminal is a matching result, and the first terminal does not learn of a specific plaintext of a user attribute of the second terminal, so that privacy of a user of the second terminal is effectively protected.

According to the user attribute matching method provided in this embodiment of the present invention, a plaintext of user attribute information does not need to be learned of, and a user attribute information matching result may be obtained through a lightweight operation while user privacy is protected, so that matching efficiency is improved, and operation load of a terminal is relieved.

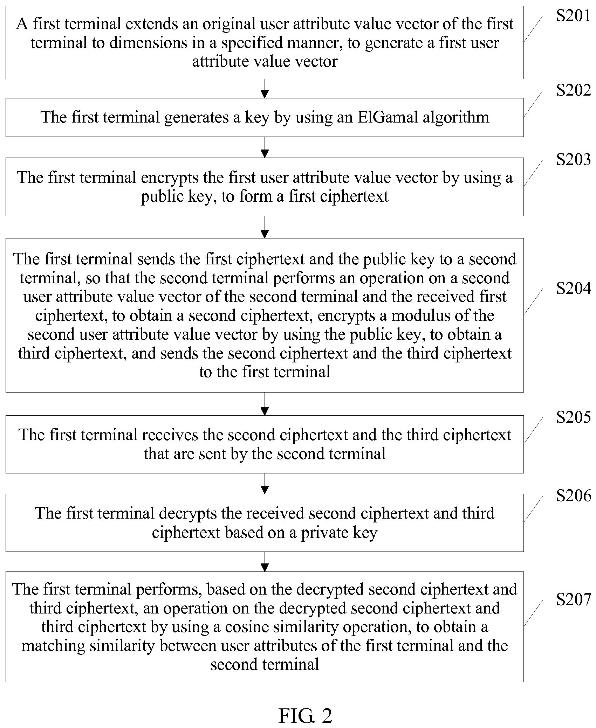

FIG. 2 is a schematic flowchart of another user attribute matching method according to an embodiment of the present invention. Based on the embodiment shown in FIG. 1, before S101 or S102, this embodiment further includes step S201: The first terminal extends an original user attribute value vector of the first terminal to $\theta \cdot d$ dimensions in a specified manner, to generate the first user attribute value vector, where an original user attribute value of the first terminal is denoted as $u_i$ ($i \in [1, d]$), $u_i \in [0, \theta-1]$, and $\theta$ and $d$ are positive integers.

In addition, a step that is in this embodiment and that is corresponding to S106 in the embodiment shown in FIG. 1 is specifically S207: The first terminal performs, based on the decrypted second ciphertext and third ciphertext, an operation on the decrypted second ciphertext and third ciphertext by using a cosine similarity operation, to obtain the matching similarity between the user attributes of the first terminal and the second terminal.

Matching calculation performed based on a cosine similarity helps improve matching execution efficiency, and is more applicable to a mobile terminal with limited resources.

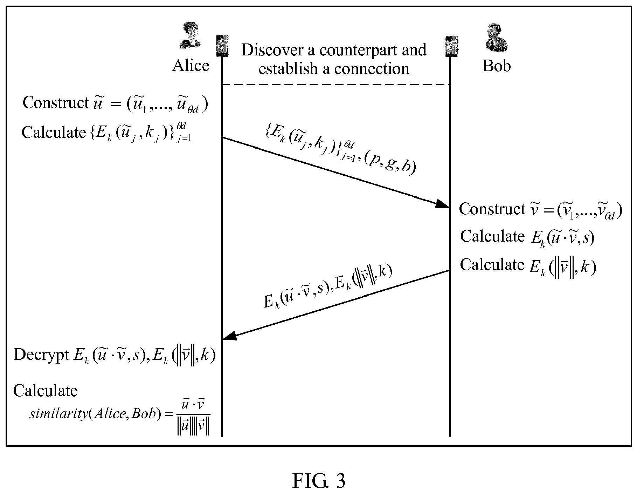

FIG. 3 is a schematic diagram of an example operation procedure of user attribute matching. The following uses a specific example to describe the operation procedure in detail with reference to FIG. 3.

In the example, a matching initiator is a terminal held by a user Alice, and a matching acceptor is a terminal held by a user Bob.

(1) The matching initiator Alice needs to perform the following steps.

a. Alice constructs an attribute value of Alice into an attribute value vector. Each attribute value of Alice may be denoted as $u_i$ ($i \in [1, d]$), and $u_i \in [0, \theta-1]$ is used to differentiate between different attributes of Alice. For example, $\theta$ is an integer such as 5 or 10. The attribute value vector of Alice is $\vec{u} = \langle u_1, \cdots, u_d \rangle$.

Then, a vector of a $d$ dimension is extended to a $\theta \cdot d$ dimension by using the following method: calculating $\tilde{u}_j = u_i \cdot l$, $i = \lfloor (j-1)/\theta \rfloor + 1$, and $l = (j-1) mod\theta$, where $j \in [1, \theta \cdot d]$. In the foregoing step, an extended attribute value vector of Alice

is denoted as $\tilde{u}=\langle\tilde{u}_1,\cdots,\tilde{u}_{\theta d}\rangle$.

This step indicates that an original attribute value vector of Alice and the extended attribute value vector of Alice are obtained.

b. Alice randomly selects a prime number $p$ based on an ElGamal encryption algorithm, where $g$ is a primitive root of the prime number $p$; selects an integer $a$ (which is a private key of Alice) from $\{1,...,p - 1\}$; and calculates $b = g^a mod p$. $(p,g,b)$ is used as a public key of the algorithm. An integer $k_j$ is randomly selected, and $E_k(\tilde{u}_j,k_j)$ is calculated based on the public key $(p,g,b)$ generated by using the ElGamal encryption algorithm, where $j\in[1,\theta\cdot d]$, and $E_k(\tilde{u}_j,k_j)$ is a first ciphertext. A general representation form of a modified ElGamal encryption method $E_k$ is: $E_K(m,k) = (C_1, C_2) = (g^k mod p, b^k \cdot g^m mod p)$ (m is any plaintext, k is a random number, and a generated ciphertext includes two parts: $C_1, C_2$).

This step indicates that a key is generated by using ElGamal encryption algorithm and Alice encrypts the extended attribute vector.

c. Alice sends $\left\{E_k\left(\tilde{u}_j,k_j\right)\right\}_{j=1}^{\theta\cdot d}$ and the public key $(p,g,b)$ generated by using the ElGamal encryption algorithm to Bob.

This step indicates that Alice sends the first ciphertext and the public key to Bob.

(2) The matching acceptor Bob needs to perform the following steps.

a. An attribute value vector of Bob is $\vec{v}=\langle v_1,\cdots,v_d\rangle$, and $v_i\in[0,\theta- 1]$ represents a closeness degree between Bob and an attribute i.

Then, a vector of a $d$ dimension is extended to a $\theta\cdot d$ dimension by using the following method: When $j \in \mathcal{J}_v = \{j|j = (i-1)\cdot\theta + v_i + 1, 1 \leq i \leq d\}$, $\tilde{v}_j = 1$; and in the other cases, $\tilde{v}_j = 0$. In the foregoing step, an extended attribute vector of Bob is denoted as $\tilde{v} = \langle\tilde{v}_1,\cdots,\tilde{v}_{\theta\cdot d}\rangle$.

This step indicates that an original attribute value vector and the extended attribute value vector of Bob are generated.

b. Bob performs calculation:

$$E_k\left(\tilde{u}\cdot\tilde{v},s\right) = E_k\left(\sum_{j\in\mathcal{J}_v}\tilde{u}_j, \prod_{j\in\mathcal{J}_v}k_j\right) = \prod_{j\in\mathcal{J}_v} E_k\left(\tilde{u}_j,k_j\right)\ mod\ p$$

where

$$s = \prod_{j\in\mathcal{J}_v} k_j,$$

and $k_j$ is an integer that is randomly selected from $\{1,...,p - 1\}$.

This step indicates that after receiving the first ciphertext (that is, $E_k(\tilde{u}_j,k_j)$), Bob performs an operation on the extended attribute value vector of Bob and the first ciphertext, to obtain an encryption value, that is, $E_k(\tilde{u}\cdot\tilde{v},s)$, of a dot product of attribute vectors of Alice and Bob, and uses the encryption value as a second ciphertext.

c. Calculate $E_k(\|\vec{v}\|,k)$, where $k$ is an integer that is randomly selected from $\{1,...,p - 1\}$. This step indicates a process of encrypting a modulus of the vector of Bob, that is, generating a third ciphertext.

d. Bob returns calculation results of $E_k(\tilde{u}\cdot\tilde{v},s)$ and $E_k(\|\vec{v}\|,k)$ to Alice. This step indicates that Bob transmits the second ciphertext and the third ciphertext to Alice.

(3) The matching initiator Alice needs to perform the following steps.

a. Decrypt $E_k(\tilde{u}\cdot\tilde{v},s)$ and $E_k(\|\vec{v}\|,k)$, so that $D_k(E_k(\tilde{u}\cdot\tilde{v},s)) = g^{\tilde{u}\cdot\tilde{v}}$ and $D_k\left(E_k\left(\|\vec{v}\|,k\right)\right) = g^{\|\vec{v}\|}$ can be obtained (a general representation form of a modified ElGamal decryption method $D_k$ is: $D_k(E_k(m,k)) = C_2\cdot(C_1{}^a)^{-1} = (g^a)^k\cdot g^m\cdot(g^k)^{-a} = g^m$); perform a logarithm operation on results of the foregoing two formulas to obtain values of $\tilde{u}\cdot\tilde{v}$ and $\|\vec{v}\|$, where

$$\vec{u} \cdot \vec{v} = \sum_{i=1}^{d} u_i \cdot v_i = \sum_{j \in \mathcal{J}_v} \tilde{u}_j = \sum_{j=1}^{\theta \cdot d} \tilde{u}_j \cdot \tilde{v}_j = \tilde{u} \cdot \tilde{v}$$

b. Alice calculates a similarity between attributes of Alice and Bob based on a formula

$$similarity(Alice, Bob) = \frac{\vec{u} \cdot \vec{v}}{\|\vec{u}\| \cdot \|\vec{v}\|}$$

In the prior art, a matching operation is performed by using a Paillier encryption algorithm. However, there are burdensome multiplication operations and exponent operations in the Paillier encryption algorithm, resulting in low efficiency of performing the matching operation. The Paillier encryption algorithm is not appropriate for user attribute matching that is completed on an intelligent terminal with limited resources in an environment in which devices directly interact with each other in MSNP application.

In this embodiment, an additive homomorphic encryption property is implemented by using a multiplicative homomorphic encryption property of the ElGamal encryption algorithm in a homomorphic encryption technology with reference to an exponent operation, a plaintext of user attribute information does not need to be learned of, and a user attribute information matching result may be obtained through a lightweight operation while user privacy is protected. In addition, matching calculation performed based on a popular cosine similarity helps improve matching execution efficiency, and is more applicable to matching working performed on a mobile terminal with limited resources.

According to a user attribute matching method provided in this embodiment of the present invention, an additive homomorphic encryption property is implemented by using a multiplicative homomorphic encryption property of the ElGamal encryption algorithm in a homomorphic encryption technology with reference to an exponent operation, a plaintext of user attribute information does not need to be learned of, and a user attribute information matching result may be obtained through a lightweight operation while user privacy is protected. In addition, matching calculation performed based on a cosine similarity helps improve matching execution efficiency, and is more applicable to matching working performed on a mobile terminal with limited resources.

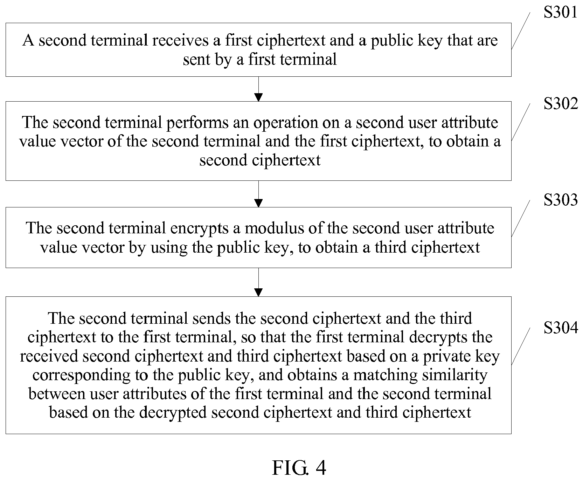

FIG. 4 is a schematic flowchart of still another user attribute matching method according to an embodiment of the present invention. The method includes the following steps.

S301. A second terminal receives a first ciphertext and a public key that are sent by a first terminal.

The first ciphertext is obtained by the first terminal after the first terminal encrypts a first user attribute value vector of the first terminal by using the public key.

S302. The second terminal performs an operation on a second user attribute value vector of the second terminal and the first ciphertext, to obtain a second ciphertext.

S303. The second terminal encrypts a modulus of the second user attribute value vector by using the public key, to obtain a third ciphertext.

S304. The second terminal sends the second ciphertext and the third ciphertext to the first terminal, so that the first terminal decrypts the received second ciphertext and third ciphertext based on a private key corresponding to the public key, and obtains a matching similarity between user attributes of the first terminal and the second terminal based on the decrypted second ciphertext and third ciphertext.

Further, before S301 or S302, the method may further include the following step.

The second terminal extends an original user attribute value vector of the second terminal to $\theta d$ dimensions in a specified manner, to generate the second user attribute value vector, where an original user attribute value of the second terminal is denoted as $v_i (i \in [1, d])$, $v_i \in [0, \theta-1]$, and $\theta$ and $d$ are positive integers.

According to the user attribute matching method provided in this embodiment of the present invention, a plaintext of user attribute information does not need to be learned of, and a user attribute information matching result may be obtained through a lightweight operation while user privacy is protected, so that matching efficiency is improved, and operation load of a terminal is relieved.

It should be noted that, for ease of description, the foregoing method embodiments are described as a series of action combinations. However, a person skilled in the art should know that the present invention is not limited to the described action sequence, because according to the present invention, some steps may be performed in other sequences or simultaneously. In addition, a person skilled in the art should also know that all the embodiments described in the specification are example embodiments, and the related actions and modules are not necessarily mandatory to the present invention.

In the foregoing embodiments, the description of each embodiment has respective focuses. For a part that is not described in detail in an embodiment, refer to related descriptions in other embodiments.

Sequence adjustment, merging, or removing may be performed on the steps of the method in the embodiments of the present invention based on an actual requirement.

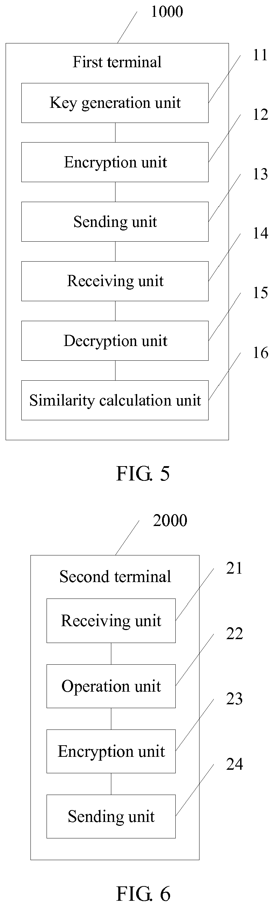

FIG. 5 is a schematic structural diagram of a first terminal according to an embodiment of the present invention. The first terminal 1000 includes a key generation unit 11, an encryption unit 12, a sending unit 13, a receiving unit 14, a decryption unit 15, and a similarity calculation unit 16.

The key generation unit 11 is configured to generate a key by using an ElGamal algorithm.

The ElGamal algorithm can be used for both data encryption and a digital signature. Security of the ElGamal algorithm depends on a difficult problem of calculating a discrete logarithm in a finite field. The key includes a public key and a private key. The public key and the private key are a pair of keys. For a generation process of the key pair, refer to the prior art, or refer to a description in the following embodiment.

The encryption unit 12 is configured to encrypt a first user attribute value vector of the first terminal by using the public key, to form a first ciphertext.

The first user attribute value vector is a user attribute value vector extended in two dimensions: different types of user attributes and a value range of each original user attribute. The first user attribute value vector is encrypted by using the public key, to obtain the first ciphertext. An encrypted user attribute value of the first terminal is no longer a plaintext, and is not easy to decrypt. For example, the original user attribute is basketball or singing. A value of the original user attribute may fall into a specific value range. For example, the value range is from 1 to 9. The value range is corresponding to a preference degree of a user for the original user attribute. For example, the user of the first terminal sets a value of basketball to 7, and sets a value of singing to 5.

The sending unit 13 is configured to send the first ciphertext and the public key to a second terminal, so that the second terminal performs an operation on a second user attribute value vector of the second terminal and the received first ciphertext, to obtain a second ciphertext, encrypts a modulus of the second user attribute value vector by using the public key, to obtain a third ciphertext, and sends the second ciphertext and the third ciphertext to the first terminal.

The second user attribute value vector herein is also a user attribute value vector extended in the two dimensions: the different types of user attributes and the value range of each original user attribute.

The second terminal performs an operation on the second user attribute value vector and the first ciphertext, to obtain the second ciphertext. The operation may be specifically a dot product operation.

The receiving unit 14 is configured to receive the second ciphertext and the third ciphertext that are sent by the second terminal.

The decryption unit 15 is configured to decrypt the received second ciphertext and third ciphertext based on the private key.

The similarity calculation unit 16 is configured to obtain a matching similarity between user attributes of the first terminal and the second terminal based on the decrypted second ciphertext and third ciphertext.

The matching similarity that is obtained by the first terminal and that is between the user attributes of the first terminal and the second terminal is a matching result, and the first terminal does not learn of a specific plaintext of a user attribute of the second terminal, so that privacy of a user of the second terminal is effectively protected.

According to the first terminal provided in this embodiment of the present invention, the first terminal does not need to learn of a plaintext of user attribute information of the second terminal, and may obtain a user attribute information matching result through a lightweight operation while user privacy is protected, so that matching efficiency is improved, and operation load of a terminal is relieved.

Further, the first terminal 1000 may further include: an extension unit (not shown in the figure), configured to extend an original user attribute value vector of the first terminal to $\theta d$ dimensions in a specified manner, to generate the first user attribute value vector, where an original user attribute value of the first terminal is denoted as $u_i(i \in [1, d])$, $u_i \in [0, \theta-1]$, and $\theta$ and $d$ are positive integers.

In addition, the similarity calculation unit 16 is specifically configured to perform, based on the decrypted second ciphertext and third ciphertext, an operation on the decrypted second ciphertext and third ciphertext by using a cosine similarity operation, to obtain the matching similarity between the user attributes of the first terminal and the second terminal.

Matching calculation performed based on a cosine similarity helps improve matching execution efficiency, and is more applicable to matching working performed on a mobile terminal with limited resources.

FIG. 6 is a schematic structural diagram of a second terminal according to an embodiment of the present invention. The second terminal 2000 includes a receiving unit 21, an operation unit 22, an encryption unit 23, and a sending unit 24.

The receiving unit 21 is configured to receive a first ciphertext and a public key that are sent by a first terminal.

The first ciphertext is obtained by the first terminal after the first terminal encrypts a first user attribute value vector of the first terminal by using the public key.

The operation unit 22 is configured to perform an operation on a second user attribute value vector of the second terminal and the first ciphertext, to obtain a second ciphertext.

The encryption unit 23 is configured to encrypt a modulus of the second user attribute value vector by using the public key, to obtain a third ciphertext.

The sending unit 24 is configured to send the second ciphertext and the third ciphertext to the first terminal, so that the first terminal decrypts the received second ciphertext and third ciphertext based on a private key corresponding to the public key, and obtains a matching similarity between user attributes of the first terminal and the second terminal based on the decrypted second ciphertext and third ciphertext.

Further, the second terminal may further include:

an extension unit (not shown in the figure), configured to extend an original user attribute value vector of the second terminal to $\theta d$ dimensions in a specified manner, to generate the second user attribute value vector, where an original user attribute value of the second terminal is denoted as $v_i(i \in [1, d])$, $v_i \in [0, \theta-1]$, and $\theta$ and d are positive integers.

According to the second terminal provided in this embodiment of the present invention, the first terminal does not need to learn of a plaintext of user attribute information of the second terminal, and may obtain a user attribute information matching result through a lightweight operation while user privacy is protected, so that matching efficiency is improved, and operation load of a terminal is relieved.

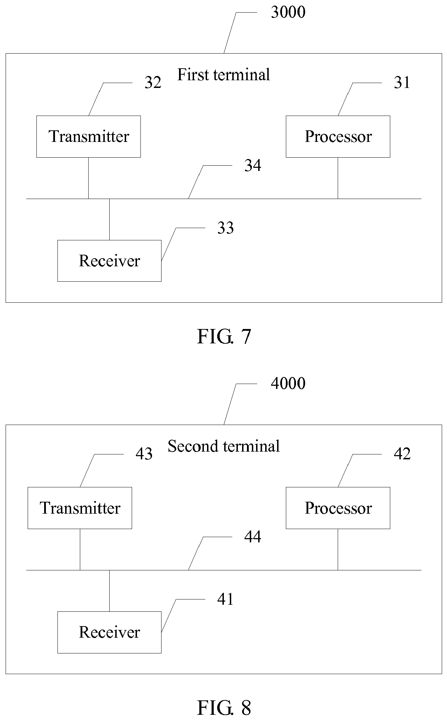

FIG. 7 is a schematic structural diagram of another first terminal according to an embodiment of the present invention. The first terminal is configured to implement the foregoing user attribute matching function. As shown in FIG. 7, the first terminal 3000 includes a processor 31, a transmitter 32, and a receiver 33. The processor 31, the transmitter 32, and the receiver 33 are connected to each other by using a bus 34.

The processor 31 is configured to generate a key by using an ElGamal algorithm, and the key includes a public key and a private key.

The processor 31 is further configured to encrypt a first user attribute value vector of the first terminal by using the public key, to form a first ciphertext.

The transmitter 32 is configured to send the first ciphertext and the public key to a second terminal, so that the second terminal performs an operation on a second user attribute value vector of the second terminal and the received first ciphertext, to obtain a second ciphertext, encrypts a modulus of the second user attribute value vector by using the public key, to obtain a third ciphertext, and sends the second ciphertext and the third ciphertext to the first terminal.

The receiver 33 is configured to receive the second ciphertext and the third ciphertext that are sent by the second terminal.

The processor 31 is further configured to decrypt the received second ciphertext and third ciphertext based on the private key.

The processor 31 is further configured to obtain a matching similarity between user attributes of the first terminal and the second terminal based on the decrypted second ciphertext and third ciphertext.

In a possible implementation, the processor 31 is further configured to:

extend an original user attribute value vector of the first terminal to $\theta d$ dimensions in a specified manner, to generate the first user attribute value vector, where an original user attribute value of the first terminal is denoted as $u_i(i \in [1, d])$, $u_i \in [0, \theta-1]$, and $\theta$ and d are positive integers.

In another possible implementation, the processor 31 is specifically configured to:

perform, based on the decrypted second ciphertext and third ciphertext, an operation on the decrypted second ciphertext and third ciphertext by using a cosine similarity operation, to obtain the matching similarity between the user attributes of the first terminal and the second terminal.

According to the first terminal provided in this embodiment of the present invention, the first terminal does not need to learn of a plaintext of user attribute information of the second terminal, and may obtain a user attribute information matching result through a lightweight operation while user privacy is protected, so that matching efficiency is improved, and operation load of a terminal is relieved.

FIG. 8 is a schematic structural diagram of another second terminal according to an embodiment of the present invention. The second terminal is configured to implement the foregoing user attribute matching function. As shown in FIG. 8, the second terminal 4000 includes a receiver 41, a processor 42, and a transmitter 43. The receiver 41, the processor 42, and the transmitter 43 are connected to each other by using a bus 44.

The receiver 41 is configured to receive a first ciphertext and a public key that are sent by a first terminal, where the first ciphertext is obtained by the first terminal after the first terminal encrypts a first user attribute value vector of the first terminal by using the public key.

The processor 42 is configured to perform an operation on a second user attribute value vector of the second terminal and the first ciphertext, to obtain a second ciphertext.

The processor 42 is further configured to encrypt a modulus of the second user attribute value vector by using the public key, to obtain a third ciphertext.

The transmitter 43 is configured to send the second ciphertext and the third ciphertext to the first terminal, so that the first terminal decrypts the received second ciphertext and third ciphertext based on a private key corresponding to the public key, and obtains a matching similarity between user attributes of the first terminal and the second terminal based on the decrypted second ciphertext and third ciphertext.

In a possible implementation, the processor 42 is further configured to:
extend an original user attribute value vector of the second terminal to $\theta \cdot d$ dimensions in a specified manner, to generate the second user attribute value vector, where an original user attribute value of the second terminal is denoted as $v_i (i \in [1, d])$, $v_i \in [0, \theta-1]$, and $\theta$ and $d$ are positive integers.

According to the second terminal provided in this embodiment of the present invention, the first terminal does not need to learn of a plaintext of user attribute information of the second terminal, and may obtain a user attribute information matching result through a lightweight operation while user privacy is protected, so that matching efficiency is improved, and operation load of a terminal is relieved.

Merging, division, and removing may be performed on the units in the embodiments of the present invention based on an actual requirement. A person skilled in the art may combine different embodiments and features of different embodiments described in this specification.

With descriptions of the foregoing embodiments, a person skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following is taken as an example but is not limited: The computer readable medium may include a random access memory (Random Access Memory, RAM), a read-only memory (Read-Only Memory, ROM), an electrically erasable programmable read-only memory (Electrically Erasable Programmable Read-Only Memory, EEPROM), a compact disc read-only memory (Compact Disc Read-Only Memory, CD-ROM) or other optical disk storage, a disk storage medium or other disk storage, or any other medium that can be used to carry or store expected program code in a command or data structure form and can be accessed by a computer. In addition, any connection may be appropriately defined as a computer-readable medium. For example, if software is transmitted from a website, a server or another remote source by using a coaxial cable, an optical fiber/cable, a twisted pair, a digital subscriber line (Digital Subscriber Line, DSL) or wireless technologies such as infrared ray, radio and microwave, the coaxial cable, optical fiber/cable, twisted pair, DSL or wireless technologies such as infrared ray, radio and microwave are included in fixation of a medium to which they belong. For example, a disk (Disk) and disc (disc) used by the present invention includes a compact disc (CD), a laser disc, an optical disc, a digital versatile disc (DVD), a floppy disk and a Blu-ray disc, where the disk generally copies data by a magnetic means, and the disc copies data optically by a laser means. The foregoing combination should also be included in the protection scope of the computer-readable medium.

In conclusion, what is described above is merely examples of embodiments of the technical solutions of the present invention, but is not intended to limit the protection scope of the present invention. Any modification, equivalent replacement, or improvement made without departing from the principle of the present invention shall fall within the protection scope of the present invention.

**Claims**

1. A user attribute matching method, comprising:

   generating, by a first terminal, a key by using an ElGamal algorithm, wherein the key comprises a public key and a private key;
   encrypting, by the first terminal, a first user attribute value vector of the first terminal by using the public key, to form a first ciphertext;
   sending, by the first terminal, the first ciphertext and the public key to a second terminal, so that the second terminal performs an operation on a second user attribute value vector of the second terminal and the received first ciphertext, to obtain a second ciphertext, encrypts a modulus of the second user attribute value vector by using the public key, to obtain a third ciphertext, and sends the second ciphertext and the third ciphertext to the first terminal;
   receiving, by the first terminal, the second ciphertext and the third ciphertext that are sent by the second terminal;
   decrypting, by the first terminal, the received second ciphertext and third ciphertext based on the private key; and
   obtaining, by the first terminal, a matching similarity between user attributes of the first terminal and the second terminal based on the decrypted second ciphertext and third ciphertext.

2. The method according to claim 1, further comprising:

extending, by the first terminal, an original user attribute value vector of the first terminal to $\theta \cdot d$ dimensions in a specified manner, to generate the first user attribute value vector, wherein an original user attribute value of the first terminal is denoted as $u_i (i \in [1, d])$, $u_i \in [0, \theta-1]$, and $\theta$ and $d$ are positive integers.

3. The method according to claim 1 or 2, wherein the obtaining, by the first terminal, a matching similarity between user attributes of the first terminal and the second terminal based on the decrypted second ciphertext and third ciphertext comprises:
performing, by the first terminal based on the decrypted second ciphertext and third ciphertext, an operation on the decrypted second ciphertext and third ciphertext by using a cosine similarity operation, to obtain the matching similarity between the user attributes of the first terminal and the second terminal.

4. A user attribute matching method, comprising:

receiving, by a second terminal, a first ciphertext and a public key that are sent by a first terminal, wherein the first ciphertext is obtained by the first terminal after the first terminal encrypts a first user attribute value vector of the first terminal by using the public key;
performing, by the second terminal, an operation on a second user attribute value vector of the second terminal and the first ciphertext, to obtain a second ciphertext;
encrypting, by the second terminal, a modulus of the second user attribute value vector by using the public key, to obtain a third ciphertext; and
sending, by the second terminal, the second ciphertext and the third ciphertext to the first terminal, so that the first terminal decrypts the received second ciphertext and third ciphertext based on a private key corresponding to the public key, and obtains a matching similarity between user attributes of the first terminal and the second terminal based on the decrypted second ciphertext and third ciphertext.

5. The method according to claim 4, further comprising:
extending, by the second terminal, an original user attribute value vector of the second terminal to $\theta \cdot d$ dimensions in a specified manner, to generate the second user attribute value vector, wherein an original user attribute value of the second terminal is denoted as $v_i (i \in [1, d])$, $v_i \in [0, \theta-1]$, and $\theta$ and $d$ are positive integers.

6. A first terminal, comprising:

a key generation unit, configured to generate a key by using an ElGamal algorithm, wherein the key comprises a public key and a private key;
an encryption unit, configured to encrypt a first user attribute value vector of the first terminal by using the public key, to form a first ciphertext;
a sending unit, configured to send the first ciphertext and the public key to a second terminal, so that the second terminal performs an operation on a second user attribute value vector of the second terminal and the received first ciphertext, to obtain a second ciphertext, encrypts a modulus of the second user attribute value vector by using the public key, to obtain a third ciphertext, and sends the second ciphertext and the third ciphertext to the first terminal;
a receiving unit, configured to receive the second ciphertext and the third ciphertext that are sent by the second terminal;
a decryption unit, configured to decrypt the received second ciphertext and third ciphertext based on the private key; and
a similarity calculation unit, configured to obtain a matching similarity between user attributes of the first terminal and the second terminal based on the decrypted second ciphertext and third ciphertext.

7. The first terminal according to claim 6, further comprising:
an extension unit, configured to extend an original user attribute value vector of the first terminal to $\theta \cdot d$ dimensions in a specified manner, to generate the first user attribute value vector, wherein an original user attribute value of the first terminal is denoted as $u_i (i \in [1, d])$, $u_i \in [0, \theta-1]$, and $\theta$ and $d$ are positive integers.

8. The first terminal according to claim 6 or 7, wherein the similarity calculation unit is specifically configured to:
perform, based on the decrypted second ciphertext and third ciphertext, an operation on the decrypted second ciphertext and third ciphertext by using a cosine similarity operation, to obtain the matching similarity between the user attributes of the first terminal and the second terminal.

9. A second terminal, comprising:

   a receiving unit, configured to receive a first ciphertext and a public key that are sent by a first terminal, wherein the first ciphertext is obtained by the first terminal after the first terminal encrypts a first user attribute value vector of the first terminal by using the public key;
   an operation unit, configured to perform an operation on a second user attribute value vector of the second terminal and the first ciphertext, to obtain a second ciphertext;
   an encryption unit, configured to encrypt a modulus of the second user attribute value vector by using the public key, to obtain a third ciphertext; and
   a sending unit, configured to send the second ciphertext and the third ciphertext to the first terminal, so that the first terminal decrypts the received second ciphertext and third ciphertext based on a private key corresponding to the public key, and obtains a matching similarity between user attributes of the first terminal and the second terminal based on the decrypted second ciphertext and third ciphertext.

10. The second terminal according to claim 9, further comprising:

    an extension unit, configured to extend an original user attribute value vector of the second terminal to $\theta \cdot d$ dimensions in a specified manner, to generate the second user attribute value vector, wherein an original user attribute value of the second terminal is denoted as $v_i (i \in [1, d])$, $v_i \in [0, \theta\text{-}1]$, and $\theta$ and d are positive integers.

11. A first terminal, comprising a processor, a transmitter, and a receiver, wherein
    the processor is configured to generate a key by using an ElGamal algorithm, wherein the key comprises a public key and a private key;
    the processor is further configured to encrypt a first user attribute value vector of the first terminal by using the public key, to form a first ciphertext;
    the transmitter is configured to send the first ciphertext and the public key to a second terminal, so that the second terminal performs an operation on a second user attribute value vector of the second terminal and the received first ciphertext, to obtain a second ciphertext, encrypts a modulus of the second user attribute value vector by using the public key, to obtain a third ciphertext, and sends the second ciphertext and the third ciphertext to the first terminal;
    the receiver is configured to receive the second ciphertext and the third ciphertext that are sent by the second terminal;
    the processor is further configured to decrypt the received second ciphertext and third ciphertext based on the private key; and
    the processor is further configured to obtain a matching similarity between user attributes of the first terminal and the second terminal based on the decrypted second ciphertext and third ciphertext.

12. The first terminal according to claim 11, wherein the processor is further configured to:
    extend an original user attribute value vector of the first terminal to $\theta \cdot d$ dimensions in a specified manner, to generate the first user attribute value vector, wherein an original user attribute value of the first terminal is denoted as $u_i (i \in [1, d])$, $u_i \in [0, 0\text{-}1]$, and $\theta$ and d are positive integers.

13. The first terminal according to claim 11 or 12, wherein the processor is specifically configured to:
    perform, based on the decrypted second ciphertext and third ciphertext, an operation on the decrypted second ciphertext and third ciphertext by using a cosine similarity operation, to obtain the matching similarity between the user attributes of the first terminal and the second terminal.

14. A second terminal, comprising a receiver, a processor, and a transmitter, wherein
    the receiver is configured to receive a first ciphertext and a public key that are sent by a first terminal, wherein the first ciphertext is obtained by the first terminal after the first terminal encrypts a first user attribute value vector of the first terminal by using the public key;
    the processor is configured to perform an operation on a second user attribute value vector of the second terminal and the first ciphertext, to obtain a second ciphertext;
    the processor is further configured to encrypt a modulus of the second user attribute value vector by using the public key, to obtain a third ciphertext; and
    the transmitter is configured to send the second ciphertext and the third ciphertext to the first terminal, so that the first terminal decrypts the received second ciphertext and third ciphertext based on a private key corresponding to the public key, and obtains a matching similarity between user attributes of the first terminal and the second terminal based on the decrypted second ciphertext and third ciphertext.

**15.** The second terminal according to claim 14, wherein the processor is further configured to:
extend an original user attribute value vector of the second terminal to $\theta \cdot d$ dimensions in a specified manner, to generate the second user attribute value vector, wherein an original user attribute value of the second terminal is denoted as $v_i (i \in [1, d])$, $v_i \in [0, \theta-1]$, and $\theta$ and $d$ are positive integers.

| A first terminal generates a key by using an ElGamal algorithm | S101 |

↓

| The first terminal encrypts a first user attribute value vector of the first terminal by using a public key, to form a first ciphertext | S102 |

↓

| The first terminal sends the first ciphertext and the public key to a second terminal, so that the second terminal performs an operation on a second user attribute value vector of the second terminal and the received first ciphertext, to obtain a second ciphertext, encrypts a modulus of the second user attribute value vector by using the public key, to obtain a third ciphertext, and sends the second ciphertext and the third ciphertext to the first terminal | S103 |

↓

| The first terminal receives the second ciphertext and the third ciphertext that are sent by the second terminal | S104 |

↓

| The first terminal decrypts the received second ciphertext and third ciphertext based on a private key | S105 |

↓

| The first terminal obtains a matching similarity between user attributes of the first terminal and the second terminal based on the decrypted second ciphertext and third ciphertext | S106 |

FIG. 1

| A first terminal extends an original user attribute value vector of the first terminal to dimensions in a specified manner, to generate a first user attribute value vector | S201 |

| The first terminal generates a key by using an ElGamal algorithm | S202 |

| The first terminal encrypts the first user attribute value vector by using a public key, to form a first ciphertext | S203 |

| The first terminal sends the first ciphertext and the public key to a second terminal, so that the second terminal performs an operation on a second user attribute value vector of the second terminal and the received first ciphertext, to obtain a second ciphertext, encrypts a modulus of the second user attribute value vector by using the public key, to obtain a third ciphertext, and sends the second ciphertext and the third ciphertext to the first terminal | S204 |

| The first terminal receives the second ciphertext and the third ciphertext that are sent by the second terminal | S205 |

| The first terminal decrypts the received second ciphertext and third ciphertext based on a private key | S206 |

| The first terminal performs, based on the decrypted second ciphertext and third ciphertext, an operation on the decrypted second ciphertext and third ciphertext by using a cosine similarity operation, to obtain a matching similarity between user attributes of the first terminal and the second terminal | S207 |

FIG. 2

Alice — Discover a counterpart and establish a connection — Bob

Construct $\widetilde{u} = (\widetilde{u}_1, ..., \widetilde{u}_{\theta d})$

Calculate $\{E_k(\widetilde{u}_j, k_j)\}_{j=1}^{\theta d}$

$\{E_k(\widetilde{u}_j, k_j)\}_{j=1}^{\theta d}, (p, g, b)$

Construct $\widetilde{v} = (\widetilde{v}_1, ..., \widetilde{v}_{\theta d})$

Calculate $E_k(\widetilde{u} \cdot \widetilde{v}, s)$

Calculate $E_k(\|\vec{v}\|, k)$

$E_k(\widetilde{u} \cdot \widetilde{v}, s), E_k(\|\vec{v}\|, k)$

Decrypt $E_k(\widetilde{u} \cdot \widetilde{v}, s), E_k(\|\vec{v}\|, k)$

Calculate
$$similarity(Alice, Bob) = \frac{\vec{u} \cdot \vec{v}}{\|\vec{u}\|\|\vec{v}\|}$$

FIG. 3

A second terminal receives a first ciphertext and a public key that are sent by a first terminal

S301

The second terminal performs an operation on a second user attribute value vector of the second terminal and the first ciphertext, to obtain a second ciphertext

S302

The second terminal encrypts a modulus of the second user attribute value vector by using the public key, to obtain a third ciphertext

S303

The second terminal sends the second ciphertext and the third ciphertext to the first terminal, so that the first terminal decrypts the received second ciphertext and third ciphertext based on a private key corresponding to the public key, and obtains a matching similarity between user attributes of the first terminal and the second terminal based on the decrypted second ciphertext and third ciphertext

S304

FIG. 4

1000

```
┌─────────────────────────────────────────┐
│           First terminal           ╱ 1000│
│  ┌─────────────────────────────┐ ╱ 11    │
│  │     Key generation unit     │╱        │
│  └─────────────────────────────┘         │
│              │                   ╱ 12     │
│  ┌─────────────────────────────┐╱        │
│  │      Encryption unit        │         │
│  └─────────────────────────────┘         │
│              │                   ╱ 13     │
│  ┌─────────────────────────────┐╱        │
│  │       Sending unit          │         │
│  └─────────────────────────────┘         │
│              │                   ╱ 14     │
│  ┌─────────────────────────────┐╱        │
│  │      Receiving unit         │         │
│  └─────────────────────────────┘         │
│              │                   ╱ 15     │
│  ┌─────────────────────────────┐╱        │
│  │      Decryption unit        │         │
│  └─────────────────────────────┘         │
│              │                   ╱ 16     │
│  ┌─────────────────────────────┐╱        │
│  │  Similarity calculation unit│         │
│  └─────────────────────────────┘         │
└─────────────────────────────────────────┘
```

FIG. 5

2000

```
┌───────────────────────────────┐
│       Second terminal    ╱ 2000│
│  ┌─────────────────────┐ ╱ 21  │
│  │   Receiving unit    │╱      │
│  └─────────────────────┘       │
│            │          ╱ 22      │
│  ┌─────────────────────┐╱      │
│  │   Operation unit    │       │
│  └─────────────────────┘       │
│            │          ╱ 23      │
│  ┌─────────────────────┐╱      │
│  │   Encryption unit   │       │
│  └─────────────────────┘       │
│            │          ╱ 24      │
│  ┌─────────────────────┐╱      │
│  │    Sending unit     │       │
│  └─────────────────────┘       │
└───────────────────────────────┘
```

FIG. 6

3000

First terminal

32

Transmitter

31

Processor

34

33

Receiver

FIG. 7

4000

Second terminal

43

Transmitter

42

Processor

44

41

Receiver

FIG. 8

## INTERNATIONAL SEARCH REPORT

| International application No. |
|---|
| PCT/CN2015/098220 |

**A. CLASSIFICATION OF SUBJECT MATTER**

G06F 21/62 (2013.01)

According to International Patent Classification (IPC) or to both national classification and IPC

**B. FIELDS SEARCHED**

Minimum documentation searched (classification system followed by classification symbols)

G06F; H04L; H04W

Documentation searched other than minimum documentation to the extent that such documents are included in the fields searched

Electronic data base consulted during the international search (name of data base and, where practicable, search terms used)

WPI; EPODOC; CNPAT; CNKI; IEEE: social network, proximity-based mobile social network, user, profile, feature, characteristic, match, computing, privacy, encryption, isomorphic, ElGamal

**C. DOCUMENTS CONSIDERED TO BE RELEVANT**

| Category* | Citation of document, with indication, where appropriate, of the relevant passages | Relevant to claim No. |
|---|---|---|
| X | CN 104156671 A (TSINGHUA UNIVERSITY) 19 November 2014 (19.11.2014) description, pages 1-3 | 4, 5, 9, 10, 14, 15 |
| Y | CN 104156671 A (TSINGHUA UNIVERSITY) 19 November 2014 (19.11.2014) description, pages 1-3 | 1-3, 6-8, 11-13 |
| Y | CN 103826220 A (XIDIAN UNIVERSITY) 28 May 2014 (28.05.2014) description, pages 4 and 5 | 1-3, 6-8, 11-13 |
| A | CN 105162695 A (HUNAN UNIVERSITY OF SCIENCE AND ENGINEERING) 16 December 2015 (16.12.2015) the whole document | 1-15 |
| A | US 2009198666 A1 (WINSTON, H. RONALD et al.) 06 August 2009 (06.08.2009) the whole document | 1-15 |

☐ Further documents are listed in the continuation of Box C.     ☒ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" document member of the same patent family | |

| Date of the actual completion of the international search | Date of mailing of the international search report |
|---|---|
| 04 July 2016 | 26 June 2016 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>XIE, Xin<br><br>Telephone No. (86-10) 62413670 |

Form PCT/ISA /210 (second sheet) (July 2009)

INTERNATIONAL SEARCH REPORT
Information on patent family members

International application No.

PCT/CN2015/098220

| Patent Documents referred in the Report | Publication Date | Patent Family | Publication Date |
|---|---|---|---|
| CN 104156671 A | 19 November 2014 | None | |
| CN 103826220 A | 28 May 2014 | None | |
| CN 105162695 A | 16 December 2015 | None | |
| US 2009198666 A1 | 06 August 2009 | CN 101983383 A | 02 March 2011 |
| | | JP 2011511982 A | 14 April 2011 |
| | | EP 2252945 A1 | 24 November 2010 |
| | | WO 2009097153 A1 | 06 August 2009 |
| | | INCHENP 201005436 E | 10 December 2010 |

Form PCT/ISA /210 (patent family annex) (July 2009)